# EUROPEAN PATENT SPECIFICATION

(11) **EP 2 937 260 B1**
(45) Date of publication and mention of the grant of the patent: **06.10.2021**
(21) Application number: 14165496.2
(22) Date of filing: 22.04.2014
(51) Int. Cl.: G01S 7/481, G01S 7/497, G01S 13/87, G01S 13/88, B61L 23/04, B61L 29/00, G01S 13/34

(54) **Orientation verification method for railroad crossing object detectors**
Orientierungsverifizierungsverfahren für Bahnübergang-Objektdetektoren
Procédé de vérification d'orientation pour détecteurs d'objet de passage à niveau

(43) Date of publication of application: 28.10.2015
(73) Proprietor: ECM S.P.A., 51034 Serravalle Pistoiese (PT) (IT)
(72) Inventor: Agostini, Alessandro, 50134 FIRENZE (IT); Ricci, Andrea, 50124 FIRENZE (IT); Tili, Marco, 59021 VAIANO PO (IT)
(74) Representative: Modiano, Micaela Nadia

(56) References cited:
- EP-A1- 2 394 882
- EP-A1- 2 631 668
- DE-U1- 29 623 877
- None

## Description

### Technical Field

The invention relates to the field of scanning methods and in particular to scanning for an object at a railroad crossing.

### Background

Scanning systems are generally used to detect objects within an area under surveillance. Scanning systems may be used at railway crossings to detect an intrusion onto the rail tracks after the rail crossing barriers have been closed when an approaching train is detected.

Scanning systems may rely on reflectors that reflect frequency-modulated radar and utilize the frequency and amplitude differences between the transmitted and reflected signal to determine the presence of an object in the surveillance area. Other prior scanning systems may use transmitter and receivers that are responsive to the reflections of signals from the objects and do not utilize a reflector or detect the presence of a signal from the reflector.

Several systems have been developed which utilize microwave detection systems. U.S.7295111 B2 describes a system having a transmitter that may send a signal and a modulating reflector that may receive the transmitted signal. The modulation reflector may comprise a modulator to receive the received signal and to generate a modulated signal. The modulated signal may be re-transmitted and received by the original receiver.

U.S.2008136632 A1 describes a system and method for automatically detecting intrusion in an off-limit zone. The system may include a transmitter for transmitting a signal along a path covering the off-limits zone and a modulating reflector for receiving the transmitted signal. The modulating reflector may transmit a modulated signal. The system may further include a processor coupled to the transmitter and to the receiver, the processor may be configured to process the received modulated signal and to initiate an action as a function of the characteristic in the received modulated signal.

EP 2394882 A1 describes a method for detecting and evaluating scanning signals from defined scanning regions in a first scanning process. Radar scanners may be used to detect railway gates that are positioned in the scanning regions. The signals may be detected and evaluated in a second scanning process during which evaluation of the first scanning process indicates whether the gates are detected at the defined positions. The scanning regions may be adjusted.

DE 296 23 877 U1 describes a further monitoring system for railway crossings. The present disclosure is directed, at least in part, to improving or overcoming one or more drawbacks of the prior art systems.

### Brief Summary of the Invention

The present invention is defined by the features of claim 1.

### Brief Description of the Drawings

The foregoing and other features and advantages of the present invention will be more fully understood from the following description of various embodiments, when read together with the accompanying drawings, in which:
Fig. 1 shows a railway crossing with a surveillance zone;
Fig. 2 illustrates a sawtooth modulation of the signals which can be transmitted by the radars of the present invention;

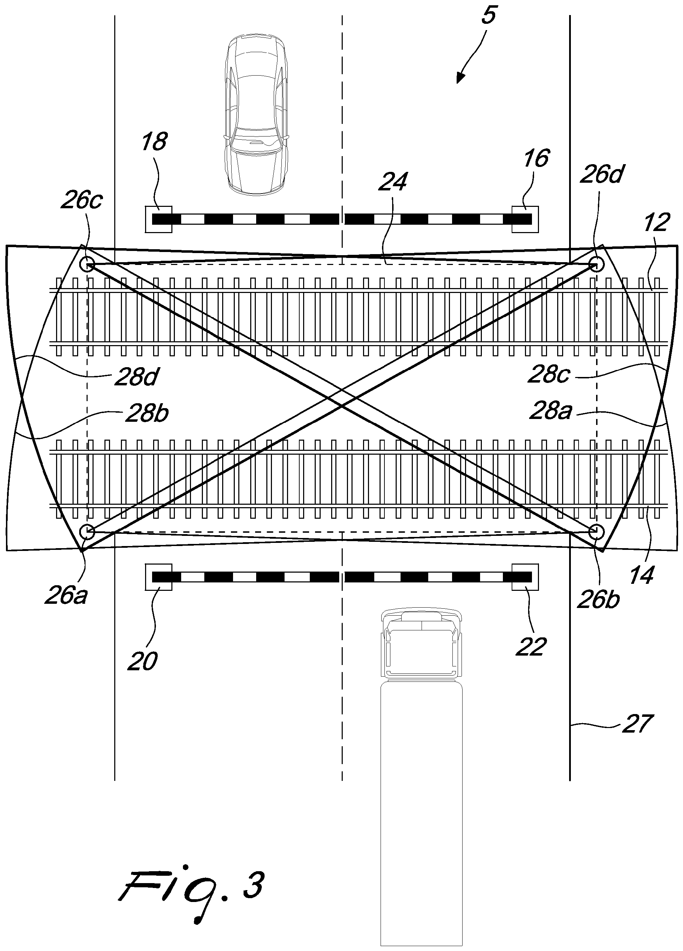

Fig. 3 shows the railway crossing of Fig. 1 with four radars with scanning zones substantially lateral across the surveillance zone and each scanning zone covers two target radars;
Fig. 4a illustrates a scanning zone of a radar having an operational yaw orientation covering two target radars;
Fig. 4b illustrates the frequency amplitudes of the received signals from the target radars;
Fig. 5 illustrates a scanning zone of a radar not having an operational yaw orientation covering a single target radar;
Fig. 5b illustrates the frequency amplitude of the received signal from a single target radar;
Fig. 6 illustrates a scanning zone of a radar having a roll orientation viewed from direction A;
Fig. 7a illustrates a scanning zone of a radar having an operational rotational orientation covering two target radars;
Fig. 7b illustrates the frequency amplitudes of the received signals from the target radars;
Fig. 8a illustrates a scanning zone of a radar not having an operational rotational orientation partially covering two target radars;
Fig. 8b illustrates the partial frequency amplitudes of the received signals from the two target radars;
Fig. 9 illustrates a scanning zone of a radar having a pitch orientation viewed from direction B;
Fig. 10a illustrates a scanning zone of a radar having an operational pitch orientation covering two target radars;
Fig. 10b illustrates the frequency amplitudes of the received signals from the target radars;
Fig. 11a illustrates a scanning zone of a radar not having an operational pitch orientation; and
Fig. 11b illustrates the very low frequency amplitudes of the received signals from the two target radars.

### Detailed Description

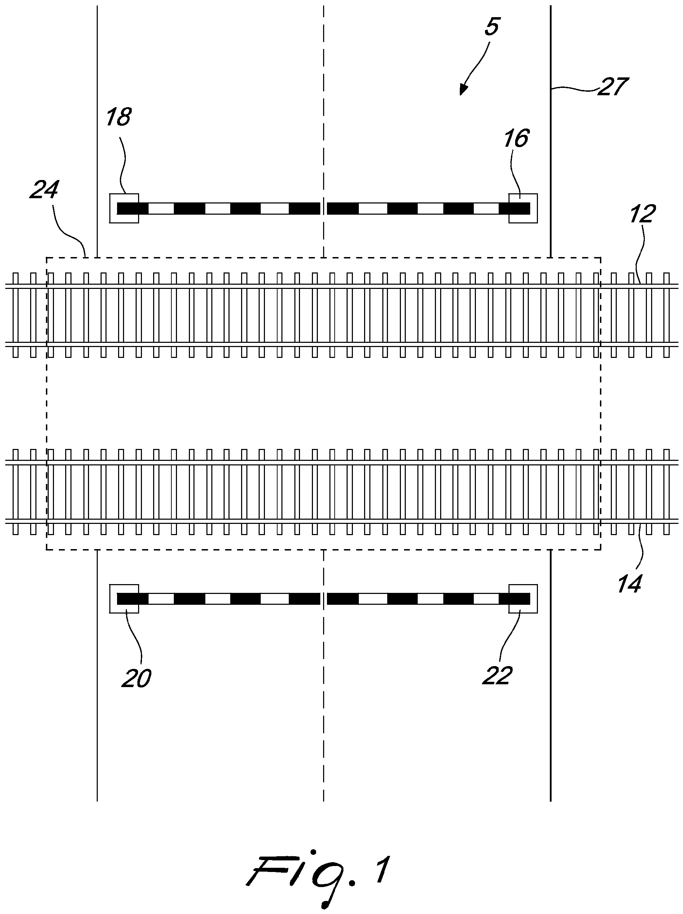

Fig. 1 shows a railway crossing **5.** Railway crossing **5** may have two rail tracks **12, 14.** The system and method may be used at a railway crossing **5** with only a single track **12.** Railway crossing **5** may have barriers **16, 18, 20, 22** to secure the tracks **12, 14** from entry of vehicles on road **27.** Barriers **16, 18, 20, 22** may secure the railway crossing **5** from entry of vehicles from crossing the rail tracks **12, 14** prior to the passage of a train at the railway crossing **5.** Barriers **16, 18, 20, 22** may be lowered prior to arrival of the train and raised after the departure of the train. Barriers **16, 18, 20, 22** may be controlled by a barrier control system that may communicate with other control systems.

The railway crossing **5** may have a crossing area that is susceptible to crossing by persons or vehicles. The presence of a vehicle or a person in the crossing area may present an obstacle to the passing train. The crossing area may be monitored in order to ensure that no object, such as a vehicle or person, is present on or at the vicinity of the rail tracks **12, 14** after the barriers **16, 18, 20, 22** are closed.

The railway crossing **5** may have a surveillance zone **24** that is monitored for presence of objects on or at the vicinity of the rail tracks **12, 14.** The surveillance zone **24** may be positioned such that the crossing area may be located within the surveillance zone **24.** The barriers **16, 18, 20, 22** may be located at the borders of the surveillance zone **24.**

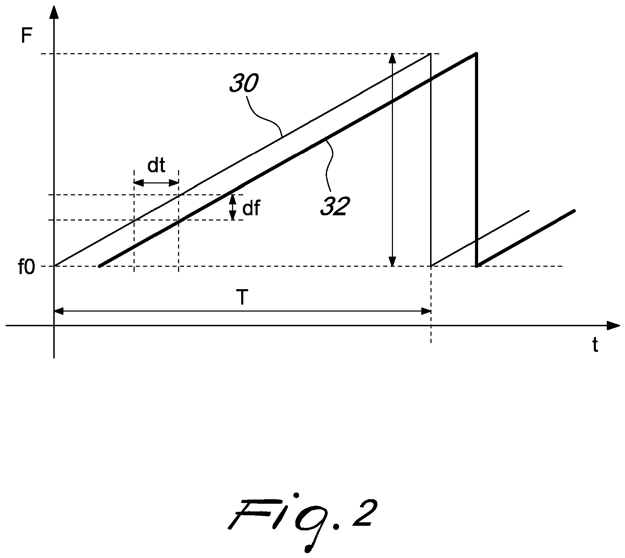

With reference to Fig. 2, a system **10** for object detection at the railway crossing may comprise a plurality of fixed radar transmitters **26.** The fixed radar transmitters **26** may be provided for scanning the surveillance zone **24.** Each fixed radar transmitter **26** may have a fixed antenna. The fixed radar transmitters **26** may be stationery. The fixed radar transmitters **26** may be continuous wave radars. In an embodiment, the fixed radar transmitters **26** may be frequency modulated continuous wave radars (FMCW radars).

With reference to Fig 2, the FMCW fixed radar transmitters may transmit a signal having a sawtooth modulation. Fig. 2 shows a transmitted signal **30** and a received signal **32.** The waveform of the received signal **32** may be the same as the transmitted signal **30** with a frequency shift. The amount of frequency shift between the transmitted signal **30** and the reflected signal may increase with time delay. The time delay may correspond with increasing distance. The time delay may be a measure of the distance. A small frequency shift may occur when the transmitted signal **30** is reflected from a near object while a larger frequency shift may occur when the transmitted signal **30** is reflected from a relatively distant object resulting in a greater time delay and a greater distance.

The plurality of fixed radar transmitters **26** may each have a scanning range. The scanning range may be the distance from each fixed radar transmitter **26** within which an object may be detected. The scanning range of each fixed radar transmitter **26** may extend across surveillance zone **24.** The scanning range of each fixed radar transmitter **26** may extend diagonally across surveillance zone **24.** The scanning range of each fixed radar transmitter **26** may extend laterally across surveillance zone **24.**

The plurality of fixed radar transmitters **26** may each transmit a signal in the form of a scanning beam. The scanning beam may have an aperture angle. The aperture angle may determine the beam width of the scanning beam. In an embodiment, each fixed radar transmitter **26** may have a beam aperture angle of preferably 25°. The beam aperture angle may determine the horizontal coverage of the scanning beam over a horizontal plane. The beam aperture angle may be determined by the fixed antenna.

The plurality of fixed radar transmitters **26** may have a beam elevation angle. The scanning beam angle may determine the altitude coverage of the scanning beam over a vertical plane. The beam elevation angle may be determined by the fixed antenna. The beam elevation angle may be limited to a small angle. In an embodiment, each fixed radar transmitter **26** may have an elevation angle of preferably between -10° to +10°. In an embodiment, each fixed radar transmitter **26** may have an elevation angle of preferably between -5° to +5°. In an embodiment, each fixed radar transmitter **26** may have an elevation angle of preferably between ―2.5° to +2.5°.

Each fixed radar transmitter **26** may have a scanning zone **28.** The scanning zone **28** may be determined by the scanning range, the beam aperture angle and the beam elevation angle of the fixed radar transmitter **26.** The scanning zone **28** of each fixed radar transmitter **26** may extend across surveillance zone **24.** The scanning zone **28** of each fixed radar transmitter **26** may extend substantially diagonally across surveillance zone **24.** The scanning zone **28** of each fixed radar transmitter **26** may extend substantially laterally across surveillance zone **24.** The fixed radar transmitters **26** may be suitably positioned so that the respective scanning zones **28** may provide adequate coverage of the surveillance zone **24.** The fixed radar transmitters **26** may be suitably orientated so that the respective scanning zones **28** may provide adequate coverage of the surveillance zone **24.**

In an embodiment, the system **10,** comprising the plurality of fixed radar transmitters **26,** may be positioned at an exit to a tunnel or at an entrance to a tunnel. In another embodiment, the system **10** may be positioned under an overpass. The system **10** may be positioned under an overpass for pedestrians or vehicles.

The system **10** is located at a railway crossing **5.** In a further embodiment, the system **10** may be located at a railway crossing **5** positioned at an exit to a tunnel or at an entrance to a tunnel.

With reference to Fig. 2, with four fixed radar transmitters **26a, 26b, 26c, 26d,** each fixed radar transmitter **26a, 26b, 26c, 26d** has a respective scanning zone **28a, 28b, 28c, 28d** that extends to cover at least two target objects. The two target objects may be fixed radar transmitters **26a, 26b, 26c, 26d.** The target objects are opposite from the fixed radar transmitter **26a, 26b, 26c, 26d** that is sending the scanning beam.

Any single point at the surveillance zone **24** may be covered by at least two fixed radar transmitters **26a, 26b, 26c, 26d.** At any point on the surveillance zone **24** there may be two overlapping scanning zones **28a, 28b, 28c, 28d.** The entire surveillance zone may be covered by at least two overlapping scanning zones **28a, 28b, 28c, 28d.** The coverage by at least two overlapping scanning zones **28a, 28b, 28c, 28d** may provide an enhanced detection level of an obstacle.

The system **10** may further comprise a control unit to evaluate the energy signals received by a plurality of radar receivers. The control unit may be in electronic communication with the fixed radar transmitters **26a, 26b, 26c, 26d** and with the radar receivers. The control unit evaluates the energy signals received by the radar receivers by comparing the received energy signals to expected energy signals. The control may determine the presence of an object within the surveillance zone **24** based on the comparison of the received energy signals to expected energy signals. The control unit may update the expected energy signal as part of a moving average algorithm.

Each fixed radar transmitter **26a, 26b, 26c, 26d** may be accompanied with respective radar receiver. In an embodiment, the fixed antenna may serve as a transmitter and a receiver.

In order to determine integrity of each fixed radar transmitter **26a, 26b, 26c, 26d** scanning beams may be transmitted to the receiver of the opposed fixed radar transmitter **26a, 26b, 26c, 26d.** The signals received by the receiver may be processed by the control unit. The fixed radar transmitter **26a, 26b, 26c, 26d** may be considered to be in a working condition when the scanning beam that is transmitted is received by the radar receiver of the opposed fixed radar transmitter **26a, 26b, 26c, 26d.**

An integrity cross-check may be performed between oppositely positioned fixed radar transmitters **26a, 26b, 26c, 26d** and the associated radar receivers. The cross-check may comprise sending scanning beams by both the fixed radar transmitters **26a, 26b, 26c, 26d** to the opposed fixed radar transmitters **26a, 26b, 26c, 26d.** The scanning beams may be received by the respective radar receivers.

Each fixed radar transmitter **26a, 26b, 26c, 26d** may be positioned at the surveillance zone **24** such that the respective scanning beam may cover at least two target fixed radar transmitters **26a, 26b, 26c, 26d.** As an example, fixed radar transmitter **26c** may have a scanning zone **28c** that extends over fixed radar transmitters **26b**, **26d** that are termed as target fixed radar transmitters.

Each fixed radar transmitter **26a, 26b, 26c, 26d** may be positioned at a height of approximately 1 meter. Each fixed radar transmitter **26a, 26b, 26c, 26d** may be positioned at a height of approximately 1 meter from the rail tracks **12, 14.** Each radar receiver may be positioned at a height of approximately 1 meter. Each radar receiver may be positioned at a height of approximately 1 meter from the rail tracks **12, 14.** Each fixed radar transmitter **26a**, **26b, 26c, 26d** may be carried by a support.

A method for object detection at a railway crossing may comprise activating the plurality of fixed radar transmitters **26a, 26b, 26c, 26d** and transmitting a signal from a fixed radar transmitter **26a, 26b, 26c, 26d** to at least two opposed target fixed radar transmitters **26a, 26b, 26c, 26d.** The transmitting fixed radar transmitters **26a, 26b, 26c, 26d** may monitor for received signals from the target fixed radar transmitters **26a, 26b, 26c, 26d.** The orientation of the scanning zone **28a, 28b, 28c, 28d** of the transmitting fixed radar transmitter **26a, 26b, 26c, 26d** may be determined.

The orientation of the scanning zone **28a, 28b, 28c, 28d** of a fixed radar transmitter **26a, 26b, 26c, 26d** may be determined to be in an operational orientation. The determination of an operational orientation may be verified by checking the rotation of the scanning zone **28a, 28b, 28c, 28d.** The determination of an operational orientation may be verified by checking the rotational position of the fixed radar transmitter **26a, 26b, 26c, 26d.** The rotation about the yaw axis, roll axis and the pitch axis may be checked to determine the operational orientation of the fixed radar transmitter **26a, 26b, 26c, 26d**.

In the following description the operational orientation of the fixed radar transmitter **26a, 26b, 26c, 26d** is explained with reference to the transmitter **26c.** Although fixed radar transmitter **26c** is indicated, the following description is applicable to all the fixed radar transmitters **26a**, **26b**, and **26d.**

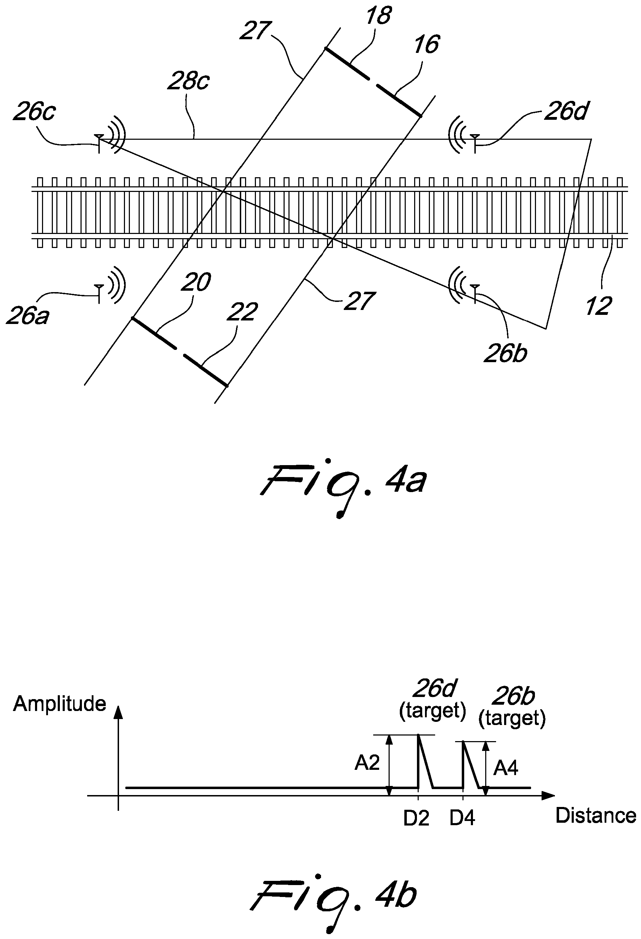

With reference to Fig. 4a, the fixed radar transmitter **26c** is shown in the operational orientation with respect to the yaw axis. The yaw axis may be a vertical axis through the fixed radar transmitter **26c** or the scanning zone **28c.** The fixed radar transmitter **26c** or the scanning zone **28c** may rotate about the yaw axis. The yaw axis may be defined to be perpendicular to the extension of the scanning zone **28c** from the fixed radar transmitter **26c** to the target fixed radar transmitters **26d, 26b.** The origin of the yaw axis may be at the center of gravity and directed towards the fixed radar transmitter **26c.** The yaw axis may be directed to the bottom of the fixed radar transmitter **26c** that faces the track **12.** A yaw motion may be a side to side movement of the scanning zone **28c** effected by the side to side movement of the fixed radar transmitter **26c.**

In the operational orientation with respect to the yaw axis, both the target fixed radar transmitters **26d, 26b** are in the scanning zone **28c.** The transmitted signal from the fixed radar transmitter **26c** may be reflected by both the target fixed radar transmitters **26d, 26b.**

With reference to Fig. 4b, the reflected signals from the target fixed radar transmitters **26d, 26b** may be received by the fixed radar transmitter **26c** with respective frequency shifts. The amplitudes **A2** and **A4** of the target fixed radar transmitters **26d, 26b** may both be at the expected levels and at the expected distances **D2** and **D4.** The result of the scanning enables the determination that the fixed radar transmitter **26c** may not be rotated about the yaw axis.

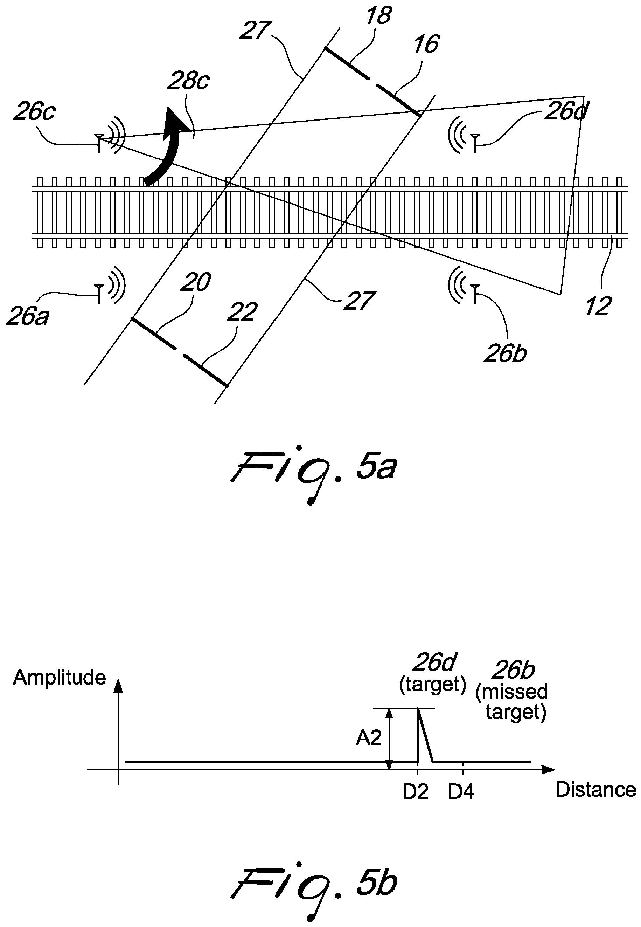

With reference to Fig. 5a, the fixed radar transmitter **26c** is shown in a non operational orientation with respect to the yaw axis. Only one target fixed radar transmitter **26d** is in the scanning zone **28c.** Target fixed radar transmitter **26b** is outside the scanning zone **28c** as a result of a rotation of the fixed radar transmitter **26c** and the scanning zone **28c** about the yaw axis. The transmitted signal from the fixed radar transmitter **26c** may be reflected only by target fixed radar transmitter **26d.** As the target fixed radar transmitter **26b** is outside the scanning zone **28c,** the transmitted signal may not arrive at fixed radar transmitter **26b** and the signal may not be reflected to the fixed radar transmitter **26c** as a received signal.

With reference to Fig. 5b, the reflected signal from the target fixed radar transmitter **26d** may be received by the fixed radar transmitter **26c** with the associated frequency shift. The amplitude **A2** of the target fixed radar transmitter **26d** may be at the expected level and at the expected distances **D2.** No received signal from the target fixed radar transmitter **26b** is present at the expected distance **D4.** The result of the scanning enables the determination that the fixed radar transmitter **26c** may be rotated about the yaw axis.

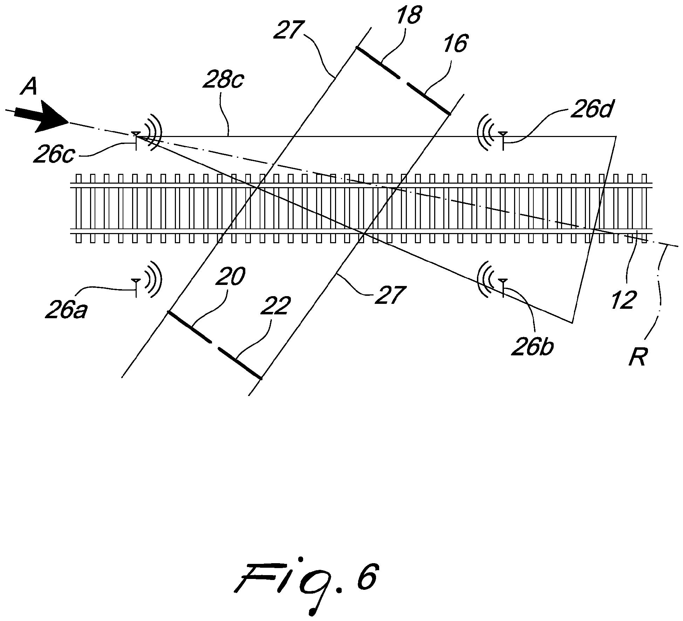

Fig. 6 illustrates a scanning zone of the fixed radar transmitter **26c** having a roll orientation viewed from direction A. The roll axis **R** may be perpendicular to the yaw axis. The origin of the roll axis may be at the aperture of the fixed radar transmitter **26c** and may be directed towards the leading edge of the scanning zone **28c.** The scanning zone **28c** may be rotated about the roll axis **R.** The rotational movement of the scanning zone **28c** about the roll axis **R** may be an up and down movement of the side edges of the scanning zone **28c.** The roll axis **R** may be a horizontal axis through the fixed radar transmitter **26c** or the scanning zone **28c.** The fixed radar transmitter **26c** or the scanning zone **28c** may rotate about the roll axis **R.** The rotational movement of the scanning zone **28c** about the roll axis **R** may be effected by a rotational movement of the fixed radar transmitter **26c.**

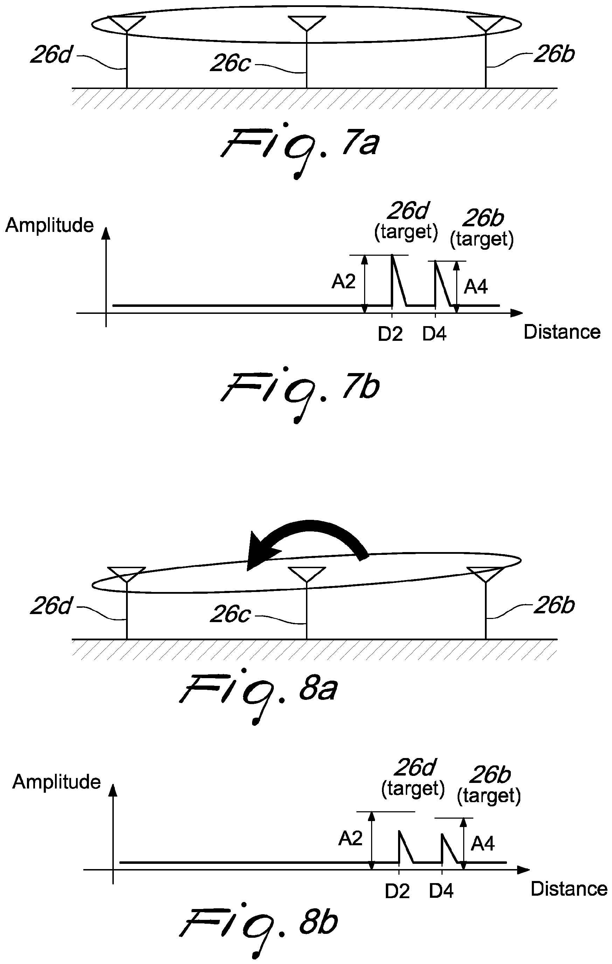

With reference to Fig. 7a, the fixed radar transmitter **26c** is shown in the operational orientation with respect to the roll axis **R** viewed from the direction **A.** Both the target fixed radar transmitters **26d, 26b** are in the scanning zone **28c.** The transmitted signal from the fixed radar transmitter **26c** may be reflected by both the target fixed radar transmitters **26d, 26b.**

With reference to Fig. 7b, the reflected signals from the target fixed radar transmitters **26d, 26b** may be received by the fixed radar transmitter **26c** with respective frequency shifts. The amplitudes **A2** and **A4** of the target fixed radar transmitters **26d, 26b** may be both at the expected levels and at the expected distances **D2** and **D4.** The result of the scanning enables the determination that the fixed radar transmitter **26c** may not be rotated about the roll axis **R.**

With reference to Fig. 8a, the fixed radar transmitter **26c** is shown in a non operational orientation with respect to the rotational axis **R** when viewed along the direction **A.** Both of the target fixed radar transmitters **26d, 26b** are partially in the scanning zone **28c** as a result of a rotation of the fixed radar transmitter **26c** and the scanning zone **28c** about the roll axis **R.** The transmitted signals from the fixed radar transmitter **26c** may be partially reflected by the target fixed radar transmitters **26d, 26b.**

With reference to Fig. 8b, the reflected signal from the target fixed radar transmitters **26d, 26b** may be received by the fixed radar transmitter **26c** with respective frequency shifts. The amplitudes **A2** and **A4** of the target fixed radar transmitter **26d** may be at the expected distances **D2** and **D4.** The amplitudes **A2** and **A4** may not be at the expected levels. The result of the scanning enables the determination that the fixed radar transmitter **26c** may be rotated about the roll axis **R.**

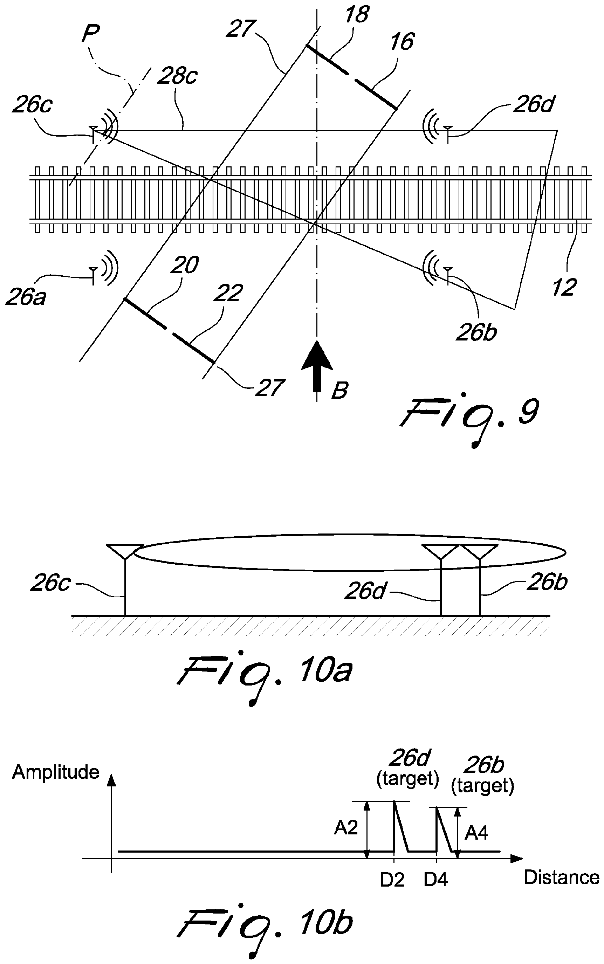

Fig. 9 illustrates a scanning zone of a radar having a pitch orientation viewed from direction B. The pitch axis **P** may be perpendicular to both the yaw axis and the roll axis **R.** The pitch axis **P** may be substantially parallel to the ground. The pitch axis **P** may be transverse to the scanning zone **28c.** The pitch axis **P** may be transverse to the fixed radar transmitter **26c.** The scanning zone **28c** may rotate about the pitch axis **P.** The rotational movement of the scanning zone **28c** about the pitch axis **P** may be an up and down movement of the scanning zone **28c.** The rotational movement of the scanning zone **28c** about the pitch axis **P** may be effected by an up and down tilting movement of the fixed radar transmitter **26c.**

With reference to Fig. 10a, the fixed radar transmitter **26c** is shown in the operational orientation with respect to the rotational axis **R** viewed from the direction **B.** Both the target fixed radar transmitters **26d, 26b** are in the scanning zone **28c.** The transmitted signal from the fixed radar transmitter **26c** may be reflected by both the target fixed radar transmitters **26d, 26b.**

With reference to Fig. 10b, the reflected signals from the target fixed radar transmitters **26d, 26b** may be received by the fixed radar transmitter **26c** with respective frequency shifts. The amplitudes **A2** and **A4** of the target fixed radar transmitters **26d, 26b** may be both at the expected levels and at the expected distances **D2** and **D4.** The result of the scanning enables the determination that the fixed radar transmitter **26c** may not be rotated about the pitch axis **P.**

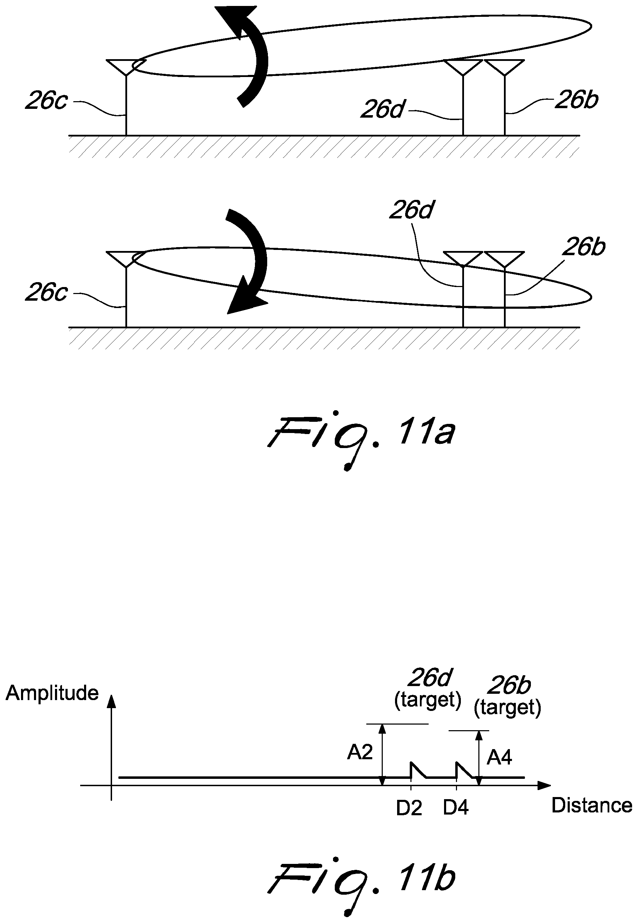

With reference to Fig. 11a, the fixed radar transmitter **26c** is shown in a non operational orientation with respect to the pitch axis **R** when viewed along the direction **B.** Both of the target fixed radar transmitters **26d, 26b** are outside of the scanning zone **28c** as a result of a rotation of the fixed radar transmitter **26c** and the scanning zone **28c** about the pitch axis **P.** The transmitted signals from the fixed radar transmitter **26c** may not be reflected by the target fixed radar transmitters **26d, 26b.**

With reference to Fig. 11b, very low levels of reflected signals from the target fixed radar transmitters **26d, 26b** may be received by the fixed radar transmitter **26c** with respective frequency shifts. The amplitudes **A2** and **A4** of the target fixed radar transmitter **26d** may be at the expected distances **D2** and the amplitudes **A2** and **A4** may not be at the expected levels. In an embodiment, there may be no reflected signals from the target fixed radar transmitters **26d, 26b.** In an embodiment, the amplitudes **A2** and **A4** may not be present. The result of the scanning enables the determination that the fixed radar transmitter **26c** may be rotated about the pitch axis **P.**

The fixed radar transmitters **26a, 26b, 26c, 26d** may transmit scanning beam towards an area in the surveillance zone **24.** The step of activating the plurality of fixed radar transmitters **26a, 26b, 26c, 26d** may comprise activating the fixed radar transmitters **26a, 26b, 26c, 26d** in sequence.

The transmitted scanning beam may be received by a radar receiver of the opposed fixed radar transmitter **26a, 26b, 26c, 26d.** The scanning zones **28a, 28b, 28c, 28d** may overlap at the surveillance zone **24.**

The method may further comprise a step of acquiring a signal indicative that the barriers **16, 18, 20, 22** that are associated with the railway crossing **10** are closed or are closing. Activation of the plurality of fixed radar transmitters **26a, 26b, 26c, 26d** may be initiated upon receipt of the signal that the barriers **16, 18, 20, 22** are closed or are closing.

The signal may be received by the control unit. The control unit may be in electronic communication with the barrier control system. The control unit may activate the fixed radar transmitters **26a, 26b, 26c, 26d** sequentially upon receipt of the signal that the barriers **16, 18, 20, 22** are closed. In an embodiment, the control unit may not activate the fixed radar transmitters **26a, 26b, 26c, 26d** if the signal that the barriers **16, 18, 20, 22** are closed is not received.
The step of scanning the surveillance zone **24** may comprise evaluating the energy signal from the surveillance zone **24** and comparing the evaluated energy signal with expected background energy signal.

The method further comprises a step of sending a signal indicative of the presence or absence of an object in the surveillance zone **24.** The expected background energy signal may be revised as a part of a moving average algorithm. The plurality of fixed radar transmitters **26a, 26b, 26c, 26d** comprise four fixed radar transmitters **26a, 26b, 26c, 26d,** wherein pairs of fixed radar transmitters **26a, 26b, 26c, 26d** are disposed at diametrically opposite vertices of the surveillance zone **24.** In an embodiment, the plurality of fixed radar transmitters **26a, 26b, 26c, 26d** may comprise two fixed radar transmitters **26a, 26b** disposed at diametrically opposite vertices of the surveillance zone **24.**

The method may acquire a signal from the barrier control system that the barriers **16, 18, 20, 22** are closed, are closing, or that a train is approaching. The surveillance zone **24** may be scanned and background energy signal (S) may be received by radar receivers. The background energy signal is compared to background expected energy (B). If |S-B| < pre-computed threshold then the surveillance zone **24** may be determined not to have an object present in the surveillance zone **24.** The integrity check may then be initiated through cross checks of radar receivers and fixed radar transmitters **26a, 26b, 26c, 26d.** Each fixed radar transmitter **26a, 26b, 26c, 26d** may be switched on in sequence so as to transmit a scanning beam to the front opposed radar receivers. If integrity check is fulfilled then a signal indicative that no object is present at the surveillance zone **24** is sent to the train through a fail-safe train signaling interface.

The fixed radar transmitters **26a, 26b, 26c, 26d** may perform an alignment check by scanning for a single or multiple passive targets. The alignment check may be performed by fixed radar transmitters **26a, 26b, 26c, 26d** scanning for a single or multiple passive targets. The alignment check may be performed after the integrity check and prior to sending of the signal. In an embodiment, the alignment check may be performed before the integrity check.

Thereafter, the background expected energy B is updated by the moving average as: Bnew= (S + B(n-1)/n. Through the moving average the background expected energy B may be revised to take into account weather conditions.

In an embodiment, the background expected energy B may be updated only when an object is determined to be present at or in the vicinity of the tracks **12, 14.** In an embodiment, the background expected energy B may be updated only when an object is determined not to be present at or in the vicinity of the tracks **12, 14.**

The moving average may be based on scans that have fulfilled the integrity checks.

In an embodiment, the background energy signal S or background expected energy signal B may be computed from multiple scans over a minimum and a maximum distance, for example S or B may be computed from 1000 sample scans between 1 to 25 meters. Each sample point may contribute, through an associated sampled value, to the S or B energy signals. The detection algorithm may use the total energy signal rather than an individual point energy signal for comparison with a predetermined threshold value.

The background energy signal S or background expected energy signal B may be computed by a summation of the multiple scan values over a minimum and a maximum distance. The background energy signal S or background expected energy signal B may be computed by an average of the multiple scan values over a minimum and a maximum distance.

### Industrial Applicability

This disclosure describes an orientation verification method for detectors that scan a crossing area at the railway crossing **5.** The area under surveillance may be located between barriers **16, 18, 20, 22** at the railway crossing **5.** The orientation verification method may asses the orientation of fixed radar transmitters **26a, 26b, 26c, 26d** and receivers for scanning the area under surveillance. The method may be used to verify that the fixed radar transmitters **26a, 26b, 26c, 26d** are in the correct orientation. In particular, the method may detect if the transmitting fixed radar transmitters **26a, 26b, 26c, 26d** are in an incorrect orientation with respect to yaw, roll, and pitch thereof. The method may serve as to check integrity of the fixed radar transmitters **26a, 26b, 26c, 26d.**

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

## Claims

1. An orientation verification method for object detectors at a railway crossing (5), the method comprising:
activating at least one fixed radar transmitter (26a, 26b, 26c, 26d);
transmitting a signal from the at least one fixed radar transmitter (26a, 26b, 26c, 26d) to at least two target objects, (26a, 26b, 26c, 26d), the target objects (26a, 26b, 26c, 26d) being opposite to the at least one fixed radar transmitter (26a, 26b, 26c, 26d);
monitoring for signals received back from the target objects (26a, 26b, 26c, 26d); and
determining an orientation of a scanning zone (28a, 28b, 28c, 28d) of the at least one fixed radar transmitter (26a, 26b, 26c, 26d) by comparing amplitude levels (A2, A4) and distances (D2, D4) of the signals received from the opposed target objects (26a, 26b, 26c, 26d) with expected amplitude levels (A2, A4) and distances (D2, D4).

2. The method of claim 1 **characterized in that** the at least two target objects (26a, 26b, 26c, 26d) are fixed radar transmitters (26a, 26b, 26c, 26d).

3. The method according to claim 2 **characterized in that** the step of activating the at least one fixed radar transmitter (26a, 26b, 26c, 26d) comprises activating the fixed radar transmitters (26a, 26b, 26c, 26d) sequentially.

4. The method according to claims 2 or 3 **characterized in that** the at least two fixed radar transmitters (26a, 26b, 26c, 26d) which are target objects (26a, 26b, 26c, 26d) are fixed FMWC fixed radar transmitters (26a, 26b, 26c, 26d).

5. The method according to claim 4 **characterized in that** the transmitted signal has a sawtooth wave modulation.

6. The method according to any of the preceding claims 2 to 5 further comprising the step of transmitting the signal to radar receivers of the fixed radar transmitters (26a, 26b, 26c, 26d) which are target objects (26a, 26b, 26c, 26d).

7. The method according to any of the preceding claims wherein the scanning zones (28a, 28b, 28c, 28d) of the fixed radar transmitters (26a, 26b, 26c, 26d) overlap at a surveillance zone (24) located at the railway crossing (5).

8. The method according to any of the preceding claims further comprising the step of acquiring a signal indicative that barriers (16, 18, 20, 22) associated with the railway crossing (5) are closed.

9. The method according to any one of preceding claims wherein a rotation of the scanning zone (28a, 28b, 28c, 28d) about one or more of the yaw axis, the rotational axis (R) and the pitch axis (P) is determined by evaluation of the amplitude levels (A2, A4) and the distances (D2, D4) of the received signals.

## Patentansprüche

1. Ein Orientierungsverifzierungsverfahren für Objektdetektoren an einem Bahnübergang (5), wobei das Verfahren Folgendes umfasst:
das Aktivieren mindestens eines festen Radarsenders (26a, 26b, 26c, 26d);
das Senden eines Signals von dem mindestens einen festen Radarsender (26a, 26b, 26c, 26d) an mindestens zwei Zielobjekte (26a, 26b, 26c, 26d), wobei die Zielobjekte (26a, 26b, 26c, 26d) dem mindestens einen festen Radarsender (26a, 26b, 26c, 26d) gegenüberliegen;
das Überwachen von Signalen, die von den Zielobjekten (26a, 26b, 26c, 26d) zurückempfangen werden; und
das Bestimmen einer Orientierung einer Scanzone (28a, 28b, 28c, 28d) des mindestens einen festen Radarsenders (26a, 26b, 26c, 26d) durch das Vergleichen der Amplituden (A2, A4) und der Abstände (D2, D4) der Signale, die von den gegenüberliegenden Zielobjekten (26a, 26b, 26c, 26d) empfangen werden, mit erwarteten Amplituden (A2, A4) und Abständen (D2, D4) .

2. Das Verfahren gemäß Anspruch 1, **dadurch gekennzeichnet, dass** die mindestens zwei Zielobjekte (26a, 26b, 26c, 26d) feste Radarsender (26a, 26b, 26c, 26d) sind.

3. Das Verfahren gemäß Anspruch 2, **dadurch gekennzeichnet, dass** der Schritt des Aktivierens des mindestens einen festen Radarsenders (26a, 26b, 26c, 26d) das sequentielle Aktivieren der festen Radarsender (26a, 26b, 26c, 26d) umfasst.

4. Das Verfahren gemäß Anspruch 2 oder 3, **dadurch gekennzeichnet, dass** die mindestens zwei festen Radarsender (26a, 26b, 26c, 26d), die Zielobjekte (26a, 26b, 26c, 26d) sind, feste FMWC-Radarsender (26a, 26b, 26c, 26d) sind.

5. Das Verfahren gemäß Anspruch 4, **dadurch gekennzeichnet, dass** das gesendete Signal eine Sägezahnwellenmodulation hat.

6. Das Verfahren gemäß einem beliebigen der obigen Ansprüche 2 bis 5, das weiter den Schritt des Sendens des Signals an Radarempfänger der festen Radarsender (26a, 26b, 26c, 26d) umfasst, die Zielobjekte (26a, 26b, 26c, 26d) sind.

7. Das Verfahren gemäß einem beliebigen der obigen Ansprüche, wobei die Scanzonen (28a, 28b, 28c, 28d) der festen Radarsender (26a, 26b, 26c, 26d) sich in einem Überwachungsbereich (24) am Bahnübergang (5) überlagern.

8. Das Verfahren gemäß einem beliebigen der obigen Ansprüche, das weiter den Schritt des Erfassens eines Signals umfasst, das anzeigt, dass die mit dem Bahnübergang (5) verbundenen Barrieren (16, 18, 20, 22) geschlossen sind.

9. Das Verfahren gemäß einem beliebigen der obigen Ansprüche, wobei eine Drehung der Scanzone (28a, 28b, 28c, 28d) um eine oder mehrere der Gierachse, der Drehachse (R) und der Stampfachse (P) durch Auswertung der Amplituden (A2, A4) und der Abstände (D2, D4) der empfangenen Signale bestimmt wird.

## Revendications

1. Procédé de vérification d'orientation pour détecteurs d'objets à un passage à niveau (5), le procédé comprenant les étapes suivantes :
activer au moins un émetteur radar fixe (26a, 26b, 26c, 26d) ;
émettre un signal dudit au moins un émetteur radar fixe (26a, 26b, 26c, 26d) vers au moins deux objets cibles, (26a, 26b, 26c, 26d), les objets cibles (26a, 26b, 26c, 26d) étant en face dudit au moins un émetteur radar fixe (26a, 26b, 26c, 26d) ;
surveiller la réception de signaux qui reviennent des objets cibles (26a, 26b, 26c, 26d) ; et
déterminer une orientation d'une zone de balayage (28a, 28b, 28c, 28d) dudit au moins un émetteur radar fixe (26a, 26b, 26c, 26d) en comparant les niveaux d'amplitude (A2, A4) et les distances (D2, D4) des signaux provenant des objets cibles opposés (26a, 26b, 26c, 26d) avec des niveaux d'amplitude (A2, A4) et des distances (D2, D4) attendus.

2. Procédé selon la revendication 1, **caractérisé en ce que** lesdits au moins deux objets cibles (26a, 26b, 26c, 26d) sont des émetteurs radar fixes (26a, 26b, 26c, 26d).

3. Procédé selon la revendication 2, **caractérisé en ce que** l'étape d'activation dudit au moins un émetteur radar fixe (26a, 26b, 26c, 26d) comprend l'activation des émetteurs radar fixes (26a, 26b, 26c, 26d) en séquence.

4. Procédé selon la revendication 2 ou 3, **caractérisé en ce que** lesdits au moins deux émetteurs radar fixes (26a, 26b, 26c, 26d) qui sont des objets cibles (26a, 26b, 26c, 26d) sont des émetteurs radar fixes FMWC (26a, 26b, 26c, 26d).

5. Procédé selon la revendication 4, **caractérisé en ce que** le signal émis a une modulation en dents de scie.

6. Procédé selon l'une quelconque des précédentes revendications 2 à 5, comprenant en outre l'étape consistant à transmettre le signal à des récepteurs radar des émetteurs radar fixes (26a, 26b, 26c, 26d) qui sont des objets cibles (26a, 26b, 26c, 26d).

7. Procédé selon l'une quelconque des revendications précédentes, dans lequel les zones de balayage (28a, 28b, 28c, 28d) des émetteurs radar fixes (26a, 26b, 26c, 26d) se chevauchent au niveau d'une zone de surveillance (24) située sur le passage à niveau (5).

8. Procédé selon l'une quelconque des revendications précédentes, comprenant en outre l'étape consistant à acquérir un signal qui indique que des barrières (16, 18, 20, 22) associées au passage à niveau (5) sont fermées.

9. Procédé selon l'une quelconque des revendications précédentes, dans lequel la rotation de la zone de balayage (28a, 28b, 28c, 28d) autour d'un axe ou plus parmi l'axe de lacet, l'axe de rotation (R) et l'axe de tangage (P) est déterminée par une évaluation des niveaux d'amplitude (A2, A4) et des distances (D2, D4) des signaux reçus.
